# EUROPEAN PATENT APPLICATION

(11) **EP 3 767 353 A1**
(43) Date of publication of application: **20.01.2021**
(21) Application number: 19768634.8
(22) Date of filing: 08.02.2019
(51) Int. Cl.: G02B 6/36, G02B 6/40

(54) **OPTICAL CONNECTOR END SURFACE CLEANER**

(30) Priority: 12.03.2018 JP 2018044631; 20.07.2018 JP 2018137119
(71) Applicant: Tomoegawa Co., Ltd., Tokyo 104-8335 (JP)
(72) Inventor: GOTO, Makoto, Shizuoka-shi, Shizuoka 424-0831 (JP); SUZUKI, Masayoshi, Shizuoka-shi, Shizuoka 424-0831 (JP)
(74) Representative: Hoffmann Eitle
(86) International application number: PCT/JP2019/004681
(87) International publication number: WO 2019/176404

(57) **Abstract**

To provide a cleaner capable of easily cleaning the side surface of a pin of an optical connector.

There is provided an optical connector end surface cleaner 10A, including: a cleaning tape 11 to be contacted with the end surface of an optical connector 20; and a receiving part 14A in which at least one pin insertion recess 15A into which at least one pin 22 of the optical connector 20 is capably inserted is formed, wherein a part of the cleaning tape 11 is inserted into the at least one pin insertion recess 15A together with the at least one pin 22 by being pressed by the at least one pin 22 to be inserted into the at least one pin insertion recess 15A of the receiving part 14A, and is interposed between an inner wall surface of the at least one pin insertion recess 15A and a side surface of the at least one pin 22.

## Description

### Technical field

The present invention relates to an optical connector end surface cleaner.

### Background Art

Patent Literature 1 discloses a connector end surface cleaner having a configuration in which a thread guide is formed at a tip part of a pin that can be contacted with an end surface of an optical connector, and a cleaning thread is driven along the thread guide.

Patent Literature 2 discloses an optical fiber connector cleaner having a configuration in which a cleaning tape is stretched with the cleaning tape exposed at the tip of a rod-shaped cleaning part so that the cleaning tape can be moved forward.

Patent Literature 3 discloses optical fiber connector cleaner including a cleaning member around a tip that serves as a cleaning member for inner guide member, and a slide slider that restores the position of the cleaning member when the cleaning member comes off the tip of the inner guide member.

Patent Literature 4 discloses an end surface cleaner including a pressure sensitive adhesive layer into which a pin protrusively provided on an end surface of an optical connector is capably inserted on a support.

### Citation List

### Patent Literature

Patent Literature 1: JP 2002-090576 A
Patent Literature 2: JP 2005-181971 A
Patent Literature 3: JP 2006-201297 A
Patent Literature 4: JP 2016-175061 A

### Summary of Invention

### Technical Problem

In Patent Literatures 1 to 3, a pin protrusively provided on an end surface of an optical connector is not described or suggested. Patent Literature 4 describes that when a pin is pulled out from a pressure sensitive adhesive layer, the pressure sensitive adhesive layer may return to its original shape. However, when the pressure sensitive adhesive layer does not return to its original shape, it is necessary to change the region of the pressure sensitive adhesive layer to be contacted with an end surface.

The present invention has been made in view of the above-mentioned circumstances, and an object of the present invention is to provide an optical connector end surface cleaner capable of easily cleaning a side surface of a pin on an end surface of an optical connector.

### Solution to Problem

To solve the above-mentioned problems, the present invention provides the following aspects.

The optical connector end surface cleaner of the first aspect is an optical connector end surface cleaner for cleaning an end surface of an optical connector having at least one pin protrusively provided on the end surface, including: a cleaning tape to be contacted with a region around the at least one pin; and a receiving part in which at least one pin insertion recess into which a tip part of the at least one pin is capably inserted is formed, wherein the at least one pin insertion recess of the receiving part is formed to be recessed from a receiving surface of the receiving part on which the cleaning tape is placed, and the cleaning tape is placed to cover an opening of the at least one pin insertion recess that is opened on the receiving surface of the receiving part and be drivable to change a part in contact with the optical connector, a part of the cleaning tape is inserted into the at least one pin insertion recess together with the at least one pin by being pressed by the at least one pin to be inserted into the at least one pin insertion recess of the receiving part, and the part inserted into the at least one pin insertion recess together with the at least one pin is interposed between an inner wall surface of the at least one pin insertion recess and a side surface of the at least one pin.

The at least one pin of the optical connector includes a plurality of pins protrusively provided on the end surface, the at least one pin insertion recess formed in the receiving part includes a plurality of pin insertion recesses corresponding to the plurality of pins, and the cleaning tape can be placed on the receiving surface of the receiving part to cover an opening of the plurality of pin insertion recesses that is opened on the receiving surface of the receiving part.

The surface of the cleaning tape opposite to the receiving surface of the receiving part can be adhesive.

The optical connector end surface cleaner of the second aspect is an optical connector end surface cleaner for cleaning an end surface of an optical connector having at least one pin protrusively provided on the end surface, including: a cleaning tape to be contacted with the end surface of the optical connector; and a receiving part in which a receiving surface on which the cleaning tape is placed is formed, wherein the cleaning tape has a sheet-shaped resin foam (foam body) that forms a cleaning surface to be contacted with the end surface of the optical connector.

The optical connector end surface cleaner can be an optical connector end surface cleaner wherein the cleaning tape has a tape-shaped base material, and a sheet-shaped resin foam (foam body) that is layered on one surface of the tape-shaped base material and forms a cleaning surface to be contacted with the end surface of the optical connector.

The resin foam (foam body) can include at least one of a urethane foam and a (meth)acrylic foam.

In the present specification, the term (meth)acrylic foam means a methacrylic foam or an acrylic foam and the team (meth)acrylic resin means a methacrylic resin or an acrylic resin.

### Advantageous Effects of Invention

The optical connector end surface cleaner according to an aspect of the present invention is capable of easily cleaning the side surface of a pin. This is because the part of the cleaning tape that is inserted into the at least one pin insertion recess of the receiving part by the pin is interposed between the inner wall surface of the at least one pin insertion recess and the side surface of the pin and is in contact with the pin side surface.

### Brief Description of Drawings

Fig. 1 is a perspective view showing a first embodiment of an optical connector end surface cleaner.
Fig. 2 is a front sectional view showing a state in which at least one pin is inserted into at least one pin insertion recess of the receiving part of the optical connector end surface cleaner of Fig 1.
Fig. 3 is a perspective view showing one example of an optical connector.
Fig. 4 is a perspective view illustrating the structure of a cleaning tape.
Fig. 5 is a perspective view showing a second embodiment of an optical connector end surface cleaner.
Fig. 6 is a perspective view showing a third embodiment of an optical connector end surface cleaner.
Fig. 7 is a perspective view showing a fourth embodiment of an optical connector end surface cleaner.
Fig. 8 is a perspective view showing an example of a housing of an optical connector end surface cleaner.
Fig. 9 is a perspective view showing another example of the structure of a cleaning tape.
Fig. 10 is a front sectional view showing a state (a penetrated state) in which at least one pin is inserted into at least one pin insertion recess of a receiving part of the optical connector end surface cleaner of Fig 1.
Fig. 11 is a perspective view showing an aspect of the second embodiment of the optical connector end surface cleaner for multiple connectors.

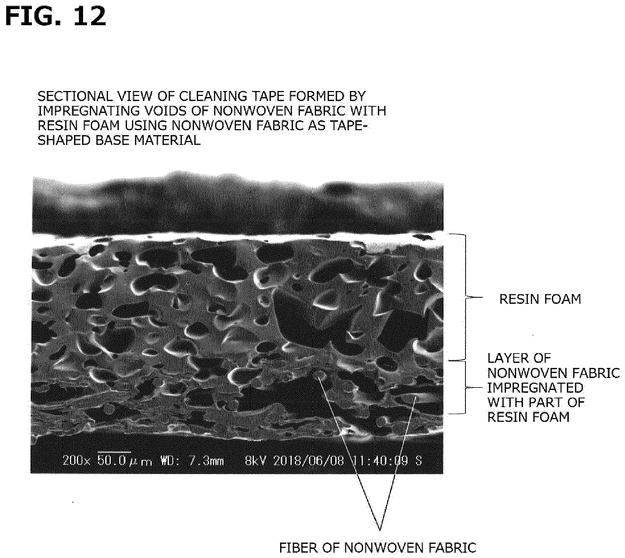

Fig. 12 is a sectional photograph (scanning electron microscope) of a cleaning tape in which a nonwoven fabric is used as a tape-shaped base material and a resin foam (foam body) is laminated.

### Description of Embodiments

An optical connector end surface cleaner according to an embodiment of the present invention will be described below with reference to the drawings.

The term "optical connector end surface" used in the present specification refers to any end surface used for optical connection such as connection end surfaces incorporated in an optical transceiver, an optical rack, and an optical termination rack, not to mention a cord type single connector that is not incorporated in an apparatus and the like.

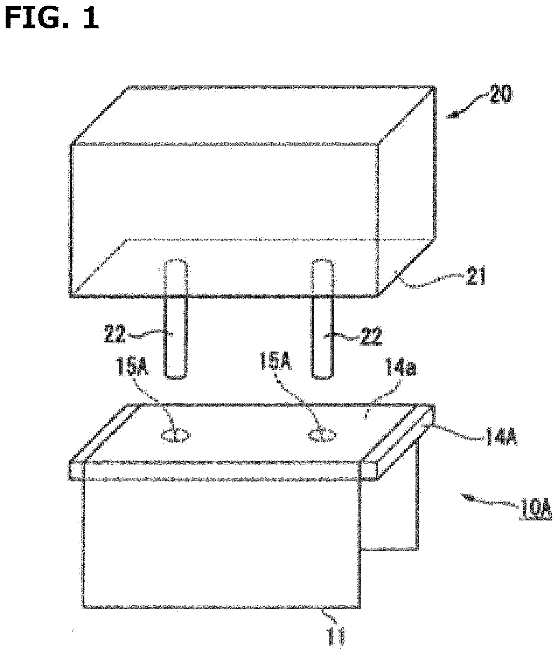

Fig. 1 shows a first embodiment of an optical connector end surface cleaner.

An optical connector end surface cleaner 10A is an optical connector end surface cleaner for cleaning an end surface 21 of an optical connector 20 having at least one pin 22 protrusively provided on the end surface 21.

The optical connector end surface cleaner 10A of the embodiment described here includes a cleaning tape 11 that can be contacted with the end surface 21 of the optical connector 20, and a receiving part 14A in which at least one pin insertion recess 15 into which the tip part of the at least one pin 22 of the optical connector 20 is capably inserted is formed.

The optical connector 20 has a plurality of pins 22 protrusively provided on the end surface 21.

Two pins 22 are protrusively provided on the end surface 21 of the optical connector 20 in Fig. 1.

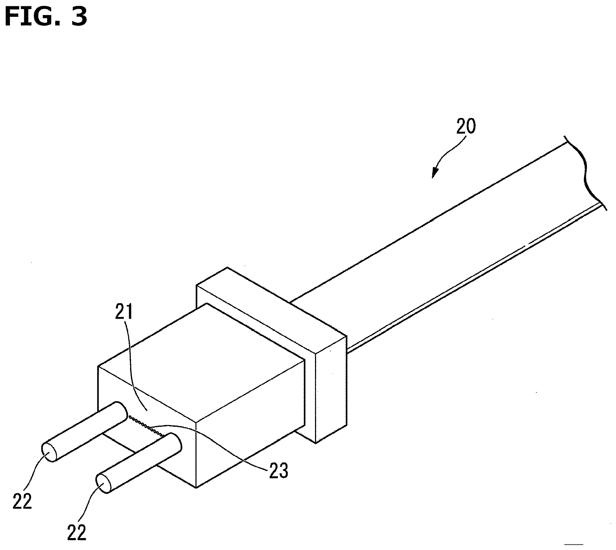

Fig. 3 shows one example of the optical connector 20. Examples of the object to be cleaned of the optical connector end surface cleaner include, as an optical connector having an end surface from which a pin for fitting (fitting pin) is protrusively provided, an MT connector (F12 type multi-core optical fiber connector: JIS C 5981), an MPO connector (F13 type multi-core optical fiber connector: JIS C 5982), an MTRJ connector, and an MPX connector. A tip of an optical fiber 23 is provided on an end surface 21 of the optical connector 20. When the end surface 21 is cleaned, the tip of the optical fiber 23 is also cleaned.

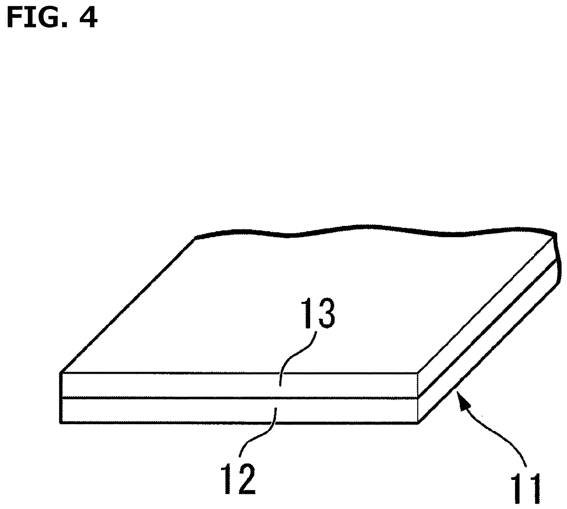

As shown in Fig. 4, the cleaning tape 11 has a pressure sensitive adhesive 13.

The pressure sensitive adhesive 13 is not limited to pressure sensitive adhesives as long as it has a function of bonding dirt to the cleaning tape 11 by contact, and examples thereof include an adhesive and a flexible resin in which the at least one pin 22 can be embedded, or through which the at least one pin 22 can pierce or penetrate.

As the material for the pressure sensitive adhesive, known materials can be used, and examples thereof include a rubber pressure sensitive adhesive, an acrylic pressure sensitive adhesive, a silicone pressure sensitive adhesive, and a urethane pressure sensitive adhesive. These pressure sensitive adhesives can contain additives such as tackifiers and fillers. Known pressure sensitive adhesives are easily available and have an advantage that the adhesive strength and the effect of preventing adhesive residue can be easily modified.

As the flexible resin, known resins can be used, and examples thereof include a polyurethane resin and a polyacrylic resin. A gel material obtained by gelling such resins can be also included. As the gel material, a soft polyurethane resin generally called polyurethane gel can be used. A gel material is easily deformed, at the same time, the at least one pin 22 can be easily embedded in the gel material, and the gel material is easily pierced or penetrated by the at least one pin 22. In this case, even when the adhesive strength of the gel material is weak, dirt can be removed from the end surface 21 and the at least one pin 22 of the optical connector 20 by the embedding effect due to the softness of the soft polyurethane, and the piercing or penetration. A gel material is slightly adhesive, thus insertion and withdrawal of the optical connector is easy, adhesive residue does not occur, and further the gel material can be reused by cleaning the surface of the soft polyurethane with dirt attached with a dust-free cloth wet with water. As the soft polyurethane, for example, a soft composition disclosed in JP 2001-316448 A can be suitably used.

The pressure sensitive adhesive 13 can be an adhesive as long as it has a function of bonding dirt to the cleaning tape 11 by contact, and for example, a weakly adhesive olefin adhesive can be used. The pressure sensitive adhesive 13 is preferably one to which measures for suppressing or preventing contamination to the connector end surface such as adhesive residue when the pressure sensitive adhesive 13 is contacted with the end surface 21 or the at least one pin 22 of the optical connector 20 have been taken.

The cleaning tape 11 can further include a tape-shaped base material 12.

The material of the tape-shaped base material 12 is not particularly limited, and known materials can be used. For example, synthetic resins, resins such as natural resins, rubbers such as natural rubbers and synthetic rubbers, natural fibers or synthetic fibers, fibers, and paper formed into a sheet shape can be used. Any of these materials can be used as long as the effects of the present invention are exhibited. For example, a resin extruded sheet, a resin sheet subjected to narrow-cutting process, a twisted fiber, a knitted fiber (mesh material, woven fabric and the like), a laminated cloth, a nonwoven fabric, paper and the like can be used.

As the knitted fiber, for example, a mesh material having a mesh structure with an opening of about 0.5 to 2.0 mm can be used.

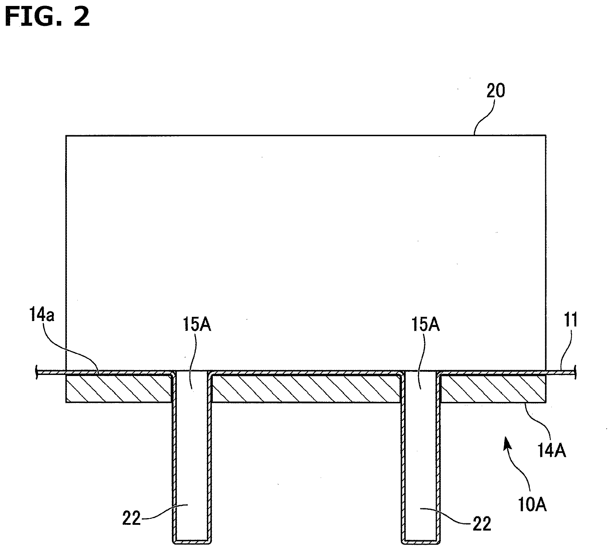

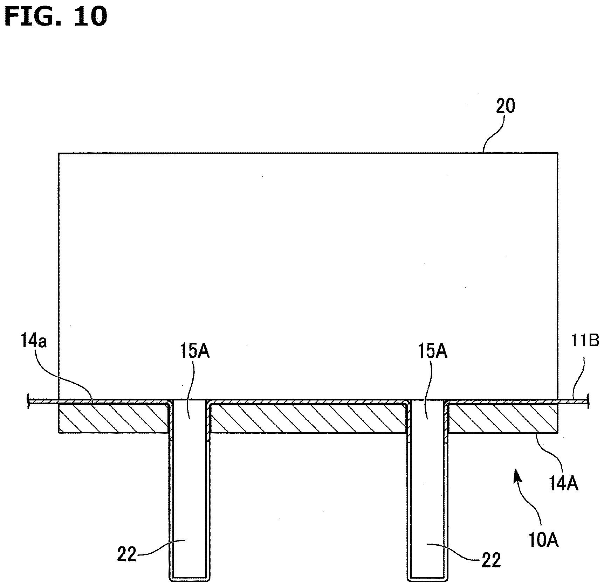

The cleaning tape 11 can be deformed to follow the shapes of the at least one pin 22 and a hole 15A when at least one pin 22 is inserted into the hole 15A, as shown in Fig. 2 below, or can be penetrated by the at least one pin 22, as shown in Fig. 10 below.

In an aspect in which the cleaning tape 11 is deformed to follow the shapes of the at least one pin 22 and the hole 15A, the cleaning tape 11 needs to be flexible, and thus an olefin or polyvinyl chloride synthetic resin can be suitably used for the tape-shaped base material 12.

Meanwhile, in an aspect in which the at least one pin 22 penetrates the cleaning tape 11 when the at least one pin 22 is inserted into the hole 15A, a tape-shaped base material having a structure that is easily penetrated or made of a material that is easily penetrated can be used.

As the tape-shaped base material having a structure that is easily penetrated, a knitted fiber having a net-like structure, a laminated cloth, a nonwoven fabric and the like can be suitably used.

When a material having voids such as a knitted fiber, a laminated cloth, and a nonwoven fabric is used as the tape-shaped base material 12, a part of the pressure sensitive adhesive 13 can infiltrate voids of the tape-shaped base material 12 (voids of the tape-shaped base material 12 can be impregnated with a part of the pressure sensitive adhesive 13). In such a state, the adhesion between the tape-shaped base material 12 and the pressure sensitive adhesive 13 is strong. Thus, there is also an advantage that the pressure sensitive adhesive 13 is detached from the tape-shaped base material 12, and adhesive residue in which the pressure sensitive adhesive 13 is attached to the end surface 21 or the at least one pin 22 is less likely to occur when the end surface 21 and the at least one pin 22 of the optical connector 20 are removed from the cleaning tape 11.

Further, as the tape-shaped base material made of a material that is easily penetrated, paper or a resin film can be suitably used. The resin that is easily penetrated is not particularly limited, and, for example, a resin that easily breaks after exhibiting some elongation, such as polyolefin resins including polyethylene resins, and a resin subjected to an easy cutting process, such as uniaxially or biaxially stretched polypropylene resins (PP) and polyethylene terephthalate resins (PET) can be suitably used.

As shown in Figs. 1, 2, and 10, the optical connector end surface cleaner 10A of the first embodiment includes the plate-shaped receiving part 14A having a penetratively formed hole 15A as a recess (pin insertion recess) into which the at least one pin 22 is capably inserted.

The hole 15A of the receiving part 14A is formed at two points separated from each other in the surface direction of the receiving part 14A corresponding to the two pins 22 of the optical connector 20.

The hole 15A of the receiving part 14A shown in Figs. 1, 2, and 10 is formed to be recessed from the receiving surface 14a of the receiving part 14A on which the cleaning tape 11 is placed.

On the receiving surface 14a of the receiving part 14A, a halfway part of the cleaning tape 11 in the longitudinal direction is placed.

The cleaning tape 11 is placed on the receiving surface 14a of the receiving part 14A so that the back side, the side opposite to the side of the pressure sensitive adhesive 13 of the tape-shaped base material 12 is contacted with the receiving surface 14a of the receiving part 14A.

The cleaning tape 11 is drivable to change the part in contact with the receiving surface 14a of the receiving part 14A by, for example, feeding movement in the longitudinal direction.

As shown in Figs. 1, 2, and 10, the cleaning tape 11 is placed on the receiving surface 14a of the receiving part 14A to cover the opening of the hole 15A that is opened on the receiving surface 14a of the receiving part 14A.

The at least one pin 22 of the optical connector end surface cleaner 10A is capably inserted into the hole 15A when the cleaning tape 11 is contacted with the end surface 21 of the optical connector 20. The cleaning tape 11 is placed between the receiving part 14A and the end surface 21, and thus the cleaning efficiency can be improved by pressing the cleaning tape 11 to the end surface 21.

The cleaning tape 11 cleans the end surface 21 by contacting the cleaning surface (adhesive cleaning surface) formed by the pressure sensitive adhesive 13 with the end surface 21 of the optical connector 20.

As shown in Fig. 2, when the at least one pin 22 is inserted into the hole 15A, the part of the cleaning tape 11 covering the opening of the hole 15A on the receiving surface 14a of the receiving part 14A and its surrounding part are pressed by the at least one pin 22 and capably pushed into the hole 15A.

When the cleaning tape 11 is pressed by the at least one pin 22 and pushed into the hole 15A as described above, the hole 15A of the receiving part 14A is formed with a cross-sectional size that allows the cleaning tape 11 to be interposed between the side surface of the at least one pin 22 inserted into the hole 15 A and the inner wall surface of the hole 15A.

Thus, as shown in Fig. 2, when the at least one pin 22 is inserted into the hole 15A, the cleaning surface of the part of the cleaning tape 11 inserted into the hole 15A together with the at least one pin 22 is contacted with the side surface of the at least one pin 22, and the side surface of the at least one pin 22 is capably cleaned. The cleaning surface of the cleaning tape 11 is also contacted with the tip of the at least one pin 22, and thus the tip of the at least one pin 22 is also capably cleaned.

As another aspect of Fig. 2, by selecting a material that is easily penetrated by the at least one pin 22 as the material for the tape-shaped base material 12 of the cleaning tape 11, an aspect is provided in which the tip of the at least one pin 22 pushes the cleaning tape 11 into the hole 15A, and then penetrates the cleaning tape 11 when the at least one pin 22 is inserted into the hole 15A (Fig. 10). When the at least one pin 22 penetrates the cleaning tape 11, the side surface of the part of the cleaning tape 11 that has been penetrated scrapes off the dirt on the side surface of the at least one pin 22, and thus the side surface of the at least one pin 22 is capably cleaned. The cleaning surface of the cleaning tape 11 is also contacted with the tip of the at least one pin 22, and thus the tip of the at least one pin 22 is also capably cleaned. In such an aspect, a gel material is suitably used as the pressure sensitive adhesive 13. The at least one pin 22 is easily embedded in the gel material and the gel material is easily pierced by the at least one pin 22, and thus the end surface 21 and the at least one pin 22 of the optical connector is capably cleaned.

The hole 15A illustrated in Figs. 1, 2, and 10 is a round hole having a circular cross section, and the at least one pin 22 is a round bar.

The hole 15A is formed to have an inner diameter that allows the cleaning tape 11 to be interposed between the side surface of the at least one pin 22 inserted in the hole 15A and the inner wall surface of the hole 15A (Fig. 2), or an inner diameter that allows the at least one pin 22 inserted in the hole 15A to penetrate the cleaning tape 11 (Fig. 10).

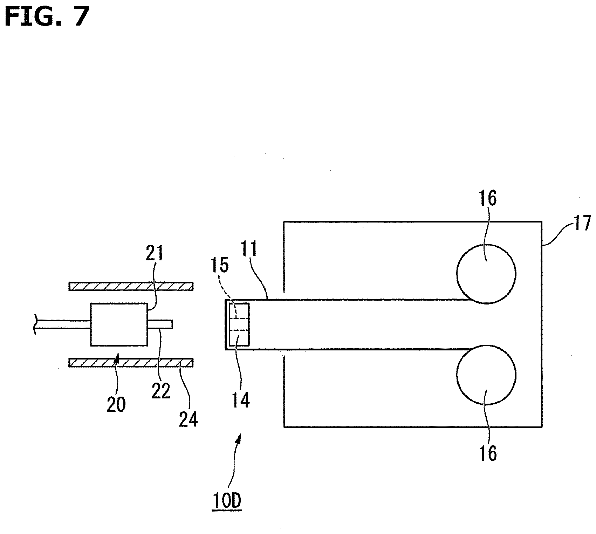

The planar shape of the hole 15A is not particularly limited, and examples thereof include a circle, an ellipse, a square, a rectangle, a rhombus, and a polygon. The receiving part 14A shown in Fig. 7 has a plurality of holes 15A corresponding to a plurality of pins 22 of the optical connector 20. However, the configuration is not particularly limited thereto, and a plurality of pins 22 can be housed in one hole 15A.

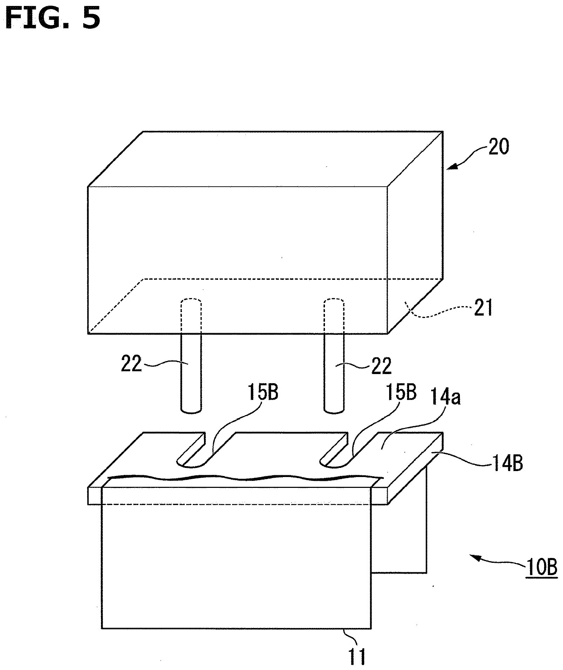

Fig. 5 shows a second embodiment of an optical connector end surface cleaner. The optical connector end surface cleaner 10B of the second embodiment includes, in addition to the configuration of the optical connector end surface cleaner 10A of the first embodiment, a receiving part 14B having a notch 15B as a recess (pin insertion recess) into which the at least one pin 22 is capably inserted. Thereby, when the cleaning tape 11 is contacted with the end surface 21 of the optical connector 20, the at least one pin 22 and a part of the cleaning tape 11 can be housed in the notch 15B. The cleaning tape 11 is placed between the receiving part 14B and the end surface 21, and thus the cleaning efficiency can be improved by pressing the cleaning tape 11 to the end surface 21.

The planar shape of the notch 15B is not particularly limited, and examples thereof include a U shape, a V shape, a semicircle, a semi-ellipse, and a polygon. The notch 15B shown in Fig. 5 extends in the same direction as the longitudinal direction of the cleaning tape 11. However, the configuration is not particularly limited thereto, and the notch 15B can be placed in a direction intersecting the longitudinal direction of the cleaning tape 11. In Fig. 5, to clarify the shape of the notch 15B, a part of the cleaning tape 11 placed on the receiving part 14B is not shown.

In the first and second embodiments, the hole 15A and the notch 15B need not be strictly distinguished. For example, when the planar shape is a closed shape, the shape is defined as the hole 15A, and when the planar shape is an open shape, the shape is defined as the notch 15B. For the length direction of the at least one pin 22, the hole 15Aand the notch 15B can penetrate the receiving parts 14A, 14B, and the hole 15A and the notch 15B need not penetrate the receiving parts 14Aand 14B. In the case of a non-through hole, a depth (depth formed from the receiving surface of the receiving part) capable of housing the entire projecting length of the at least one pin 22 from the end surface 21 of the optical connector 20 is needed.

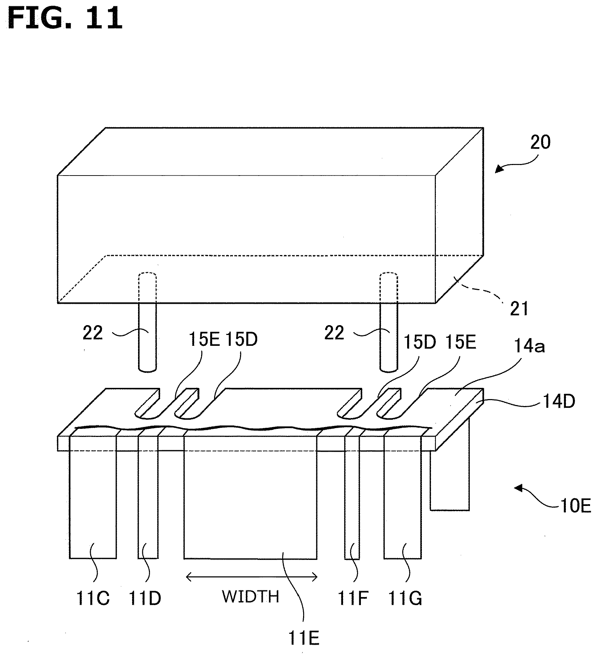

Fig. 11 shows another aspect of the second embodiment of the optical connector end surface cleaner shown in Fig. 5, and a cleaner 10E has two sets of a notch 15D (and 15E) similar to that in Fig. 5. In Fig. 11, to clarify the shape of the notch 15D (or notch 15E), a part of the cleaning tape 11C to 11G placed on the receiving part 14D is not shown. In this aspect, for example, a 12-core optical connector and a 16-core optical connector, which are generally frequently used, can be cleaned by one cleaner. The notch 15D is used to clean the 12-core optical connector, the notch 15E is used to clean the 16-core optical connector, and thus two types of optical connectors can be cleaned. The combination of the number of cores is not particularly limited, and the notch 15D (or the notch 15E) can be provided according to the position of the at least one pin of the optical connector having an arbitrary number of cores.

The combination is not limited to the combination of the 12-core optical connector and the 16-core optical connector illustrated above, and any combination can be used. In the example of Fig. 11, two types of optical connectors having different numbers of cores can be cleaned. Further, three or more types of optical connectors having different numbers of cores can be cleaned by further adding a notch (for example, a notch 15F). However, because the cleaning tapes 11C to 11G having different widths corresponding to the number of combinations of the number of notches need to be prepared, the combination of two types of the optical connectors having different numbers of cores is suitable.

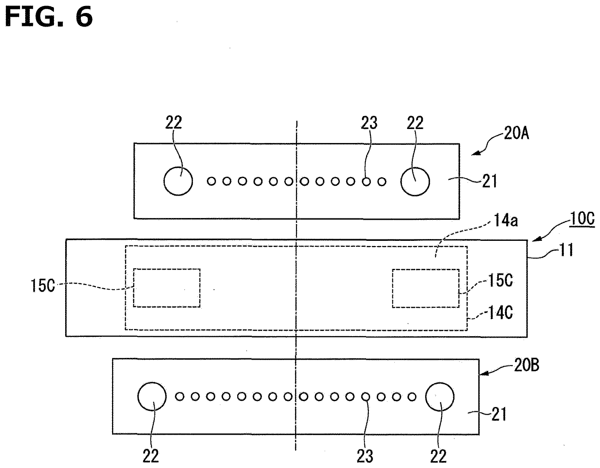

Fig. 6 shows a third embodiment of the optical connector end surface cleaner. The optical connector end surface cleaner 10C of the third embodiment is capable of cleaning the end surface of at least two types of optical connectors 20A and 20B having different intervals between the pins 22 among optical connectors having a plurality of pins 22 protrusively provided on the end surface 21.

The cleaning tape 11 is placed in a range that allows the cleaning tape 11 to be contacted with each end surface 21 of at least two types of optical connectors 20A and 20B.

Thus, the optical connector end surface cleaner 10C of the third embodiment is capable of cleaning two or more types of optical connectors 20A and 20B with the same optical connector end surface cleaner 10C.

In the example shown in Fig. 6, the optical connector 20A having a narrow interval between the pins 22 has 12 optical fibers 23 between the pins 22, and the optical connector 20B having a wide interval between the pins 22 has 16 optical fibers 23 between the pins 22. The number of the optical fiber 23 placed between the pins 22 is not particularly limited, and examples thereof include 1, 2, 4, 8, 12, 16, 24, 32, 48, and 72. The optical fibers 23 need not be placed in a line between pins 22 on the end surface 21, and can be desirably placed, for example, in two or more lines, a zigzag shape, or a circular shape. In two or more types of optical connectors 20A and 20B, the number of optical fibers 23 placed on the end surface 21 can be the same or different. The hole 15C of the receiving part 14C shown in Fig. 6 is a recess capable of housing the at least one pin 22 of both the optical connectors 20A and 20B, and is enlarged to include the position of the at least one pin 22 of the optical connectors 20A and 20B.

The cleaning tape 11 of the optical connector end surface cleaner 10C of the third embodiment has a width dimension to cover the opening of each hole 15C on the receiving surface 14a of the receiving part 14C, and is placed to cover the opening of each hole 15C on the receiving surface 14a of the receiving part 14C.

Fig. 7 shows a fourth embodiment of the optical connector end surface cleaner. The optical connector end surface cleaner 10D of the fourth embodiment includes a pair of bobbins 16 around which both ends of the cleaning tape 11 are wound, and a housing 17 that houses the bobbins 16.

The optical connector end surface cleaner 10D of the fourth embodiment includes a receiving part 14 having a recess 15 (pin insertion recess) into which the tip part of the at least one pin 22 is capably inserted. The receiving part 14 can be the receiving part 14A having the hole 15A in the first embodiment or the receiving part 14B having the notch 15B in the second embodiment.

The receiving part 14 that supports the cleaning tape 11 is formed to have a dimension that allows the receiving part 14 to be inserted into an adapter 24 so that the receiving part 14 can reach the inside of the adapter 24 and the like even if the optical connector 20 is placed in the back of an apparatus such as the adapter 24. The receiving part 14 is placed at a position projecting from the housing 17 to eliminate the necessity of inserting the housing 17 that houses the bobbin 16 into the adapter 24. Thereby, the end surface 21 of the optical connector 20 placed at the back of the adapter 24 or the like can be cleaned with the cleaning tape 11.

By moving the cleaning tape 11 from one bobbin 16 toward the other bobbin 16 along the longitudinal direction, the position of the cleaning tape 11 that is in contact with the end surface 21 or the at least one pin 22 or the like of the optical connector 20 can be changed. By changing the position of the cleaning tape 11 that is in contact with the optical connector 20, it is possible to prevent dirt from binding to the optical connector 20 from the cleaning tape 11, for example, after dirt was bound to the cleaning tape 11.

When the optical connector 20 is cleaned more than once using the cleaning tape 11, the step of contacting the cleaning tape 11 with the optical connector 20 and the step of changing the position of the cleaning tape 11 that is in contact with the end surface 21 can be repeated alternately.

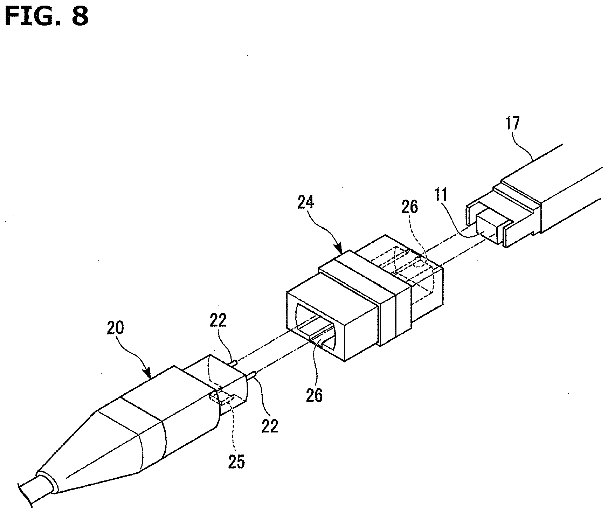

As shown in Fig. 8, most of adapters 24 have a key groove 26 into which a key 25 of the optical connector 20 is inserted. The adapter 24 can have the key groove 26, but need not have the key groove 26. When the adapter 24 does not have the key groove 26, the operation becomes simple because consideration of the direction is not needed during insertion.

By using the adapter 24 for cleaning, the cleaning tape 11 can be surely contacted with the connector end surface without displacement, for example, when the optical connector 20 side is pressed to the optical connector end surface cleaner side for cleaning.

Meanwhile, as shown in Fig. 8, the housing 17 of the optical connector end surface cleaner 10D has a configuration without a key to be inserted into the key groove 26 of the adapter 24, and thus can be inserted into various adapters and be used to clean the end surface of optical connectors including a connector without a pin.

Although the present invention has been described above based on the preferred embodiments, the present invention is not limited to the above-mentioned embodiments, and various modifications can be made without departing from the gist of the present invention. Modifications include addition, replacement, omission, and other changes of the constituent elements in each embodiment. Two or more components used in the embodiments can be appropriately combined.

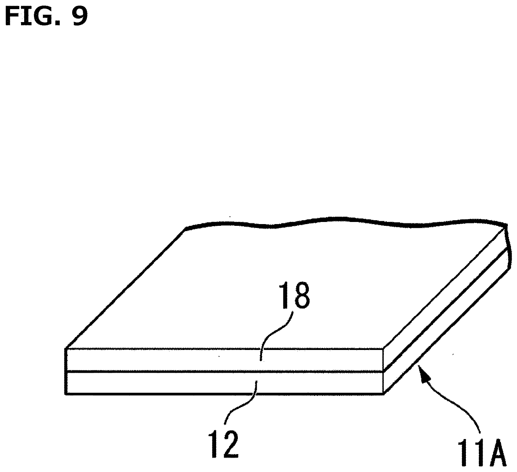

Another embodiment in which a cleaning tape including a resin foam (foam body) is used instead of the cleaning tape 11 will be described in detail below. In the present embodiment, an optical connector end surface cleaner having the same components except that the cleaning tape 11 in Figs. 1, 2 and 5 is changed to the cleaning tape 11A in Fig 9 is described.

As the cleaning tape 11A, one having a configuration having a sheet-shaped resin foam (foam body) alone or one having a configuration shown in Fig. 9 can be used. The cleaning tape 11A of Fig. 9 has a configuration in which a resin foam (foam body) 18 is layered on one surface of the tape-shaped base material 12, and the surface opposite to the tape-shaped base material 12 of the resin foam (foam body) 18 is a cleaning surface to be contacted with the end surface 21 and the at least one pin 22 of the optical connector 20. For the tape-shaped base material 12, the same material as that of the tape-shaped base material 12 of Fig. 4 can be used.

Also, in the case of the cleaning tape 11A shown in Fig. 9, a part of the pressure sensitive adhesive 13 can infiltrate voids of the tape-shaped base material 12 (voids of the tape-shaped base material 12 can be impregnated with a part of the pressure sensitive adhesive 13) even when the resin foam (foam body) 18 is used by contact, which is an advantage of using a material having voids such as a knitted fiber, a laminated cloth, and a nonwoven fabric. In such a state, the adhesion between the tape-shaped base material 12 and the resin foam (foam body) 18 is strong. Thus, the pressure sensitive adhesive 13 is detached from the tape-shaped base material 12, and adhesive residue in which the pressure sensitive adhesive 13 is attached to the end surface 21 or the at least one pin 22 is less likely to occur when the end surface 21 and the at least one pin 22 of the optical connector 20 are removed from the cleaning tape 11.

As the method of making a part of the resin foam (foam body) 18 infiltrated into the voids of the tape-shaped base material 12 (making voids of the tape-shaped base material 12 impregnated with a part of the pressure sensitive adhesive 13), known methods can be used. Apart of the resin foam (foam body) 18 can be infiltrated into the voids of the tape-shaped base material 12 (voids of the tape-shaped base material 12 can be impregnated with a part of the resin foam (foam body) 18) by, for example,
applying a raw material composition of a resin foam (foam body) that is an uncured liquid to the surface of the tape-shaped base material 12, and making the raw material composition infiltrated into the voids of the tape-shaped base material 12 (impregnating the voids of the tape-shaped base material 12 with the raw material composition), and then foaming and curing the raw material composition.

The material of the resin foam (foam body) 18 is not particularly limited, and known materials can be used. Examples thereof include resin foams (foam bodies) including a urethane resin, a (meth)acrylic resin, a saturated polyester resin, a vinyl acetate resin, a vinyl chloride resin, an epoxy resin, an olefin resin, a styrene resin, a melamine resin, a urea resin, a phenol resin, and a silicone resin. These materials can be used alone or in combination of two or more. Of these, a urethane foam is preferred because of excellent flexibility and low compressive residual strain. A (meth)acrylic foam is also suitably used because of excellent strength, lightweight properties, and heat insulating properties. A mixture of a urethane foam and a (meth)acrylic foam is suitably used as the resin foam (foam body), because the properties of the urethane foam and the properties of the acrylic foam can be adjusted by the mixing ratio according to the use.

The structure of cells contained in the resin foam (foam body) 18 is not particularly limited, and known structures can be used. The resin foam (foam body) 18 can have closed-cell structure in which each cell is independently present in the resin foam (foam body), or open-cell structure in which each cell is continuously connected in the resin foam (foam body). The open-cell structure includes a case where cells are connected by a communication through hole, and a case where cells are connected by breaking of walls of independent cells. As described above, a resin foam (foam body) having open-cell structure is preferred, because the at least one pin 22 easily pierces to or penetrates the resin foam (foam body), and dust can be removed efficiently.

The thickness of the sheet-shaped resin foam (foam body) of the present invention is not particularly limited, and can be, for example, 0.03 mm to 3 mm, preferably 0.05 mm to 2 mm, more preferably 0.1 mm to 1 mm. In such a range, the at least one pin 22 easily penetrates the sheet-shaped resin foam (foam body), and dust can be efficiently removed when the at least one pin 22 is inserted into the hole 15A.

The method for producing the resin foam (foam body) is not particularly limited, and the resin foam (foam body) can be produced by known methods. For example, the resin foam (foam body) can be produced by chemical foaming or physical foaming, and an open-cell foam body can be produced by forming closed cells and then physically crushing them for communication. For example, the method for producing a foam body disclosed in JP 2012-56985 A is suitable.

The cleaning tape 11A is capable of capturing and removing dust attached to the end surface 21 and the at least one pin 22 of the optical connector 20 by the cleaning surface formed by the resin foam (foam body) 18.

The mechanism of the capturing of dust on the cleaning surface formed by the resin foam (foam body) 18 need to be verified for elucidation. One hypothesis of the mechanism is as follows: dust pressed on a flexible cleaning surface is buried (semiburied) in the resin foam (foam body) 18, becomes less likely to be separated from the cleaning surface, and is captured by the resin foam (foam body) 18.

Another discussion example is as follows: when the end surface 21 or the at least one pin 22 of the connector 20 is pressed on the resin foam (foam body), cells in the resin foam (foam body) are crushed, and the air inside is pushed out. Further, a part of the open cells is crushed and blocked. At this time, the surface of the resin foam (foam body); and the end surface 21 and the surface of the at least one pin 22 are decompressed and adsorbed each other. Further, small dust is sucked into cells, and dust larger than cells is adsorbed by the decompression inside cells.

As a result of various verifications, it was confirmed that the resin foam (foam body) 18 does not cause attachment of foreign bodies to the at least one pin 22 even when the at least one pin 22 penetrates the resin foam (foam body) 18. In this respect, the optical connector end surface cleaner in which the cleaning tape 11A in Fig. 9 is used can have a configuration in which a receiving part in which the at least one pin insertion recess is formed is employed and cleaning is performed by the penetration of the cleaning tape 11A by the at least one pin 22. In this configuration, the resin foam (foam body) 18 has cells, is a very flexible material, and is easily pierced and penetrated by the at least one pin 22. Thus, presumably, when the at least one pin 22 pierces and penetrates the resin foam (foam body) 18, the side surface part of the at least one pin 22 becomes entangled with the resin foam (foam body), and the dust on the side surface part of the at least one pin 22 can be efficiently removed.

The cleaning tape 11A of Fig. 9 has an advantage that transfer contamination does not occur when the cleaning tape 11A is pressed on the surface to be cleaned, and thus adhesive residue does not occur when the cleaning tape 11A is used to clean the end surface 21 and the at least one pin 22 of the optical connector 20.

The cleaning tape 11A of Fig. 9 is used for an optical connector end surface cleaner having a receiving part in which at least one pin insertion recess is formed, and in addition, can be used for an optical connector end surface cleaner having a receiving part in which at least one pin insertion recess is not formed. In this case, the cleaning target is the entire end surface for the connector end surface having no pins, and is the space between the pins for the connector end surface having pins. That is, when the connector end surface having no pins is cleaned, formation of a pin insertion recess is not necessary because of lack of pins which hinder the cleaning of the entire connector end surface. Thus, the cleaning tape can also be used for cleaning the connector end surface having no pins.

### Reference Signs List

- 10A, 10B, 10C, 10D, 10E: Optical connector end surface cleaner
- 11, 11A, 11B, 11C, 11D, 11E, 11F, 11G: Cleaning tape
- 12: Tape-shaped base material
- 13: Pressure sensitive adhesive
- 14, 14A, 14B, 14C: Receiving part
- 14a: Receiving surface
- 15: Recess
- 15A, 15C: hole
- 15B: Notch
- 16: Bobbin
- 17: Housing
- 18: Resin foam (foam body)
- 20, 20A, 20B: Optical connector
- 21: End surface
- 22: Pin
- 23: Optical fiber
- 24: Adapter

## Claims

1. An optical connector end surface cleaner for cleaning an end surface of an optical connector having at least one pin protrusively provided on the end surface, comprising:
a cleaning tape to be contacted with the end surface of the optical connector; and
a receiving part in which at least one pin insertion recess into which a tip part of the at least one pin is capably inserted is formed,
wherein the at least one pin insertion recess of the receiving part is formed to be recessed from a receiving surface of the receiving part on which the cleaning tape is placed, and
the cleaning tape is placed to cover an opening of the at least one pin insertion recess that is opened on the receiving surface of the receiving part and be drivable to change a part in contact with the optical connector, a part of the cleaning tape is inserted into the at least one pin insertion recess together with the at least one pin by being pressed by the at least one pin to be inserted into the at least one pin insertion recess of the receiving part, and the part inserted into the at least one pin insertion recess together with the at least one pin is interposed between an inner wall surface of the at least one pin insertion recess and a side surface of the at least one pin.

2. The optical connector end surface cleaner of claim 1, wherein the at least one pin of the optical connector includes a plurality of pins protrusively provided on the end surface, the at least one pin insertion recess formed in the receiving part includes a plurality of pin insertion recesses corresponding to the plurality of pins, and the cleaning tape is placed on the receiving surface of the receiving part to cover an opening of the plurality of pin insertion recesses that is opened on the receiving surface of the receiving part.

3. The optical connector end surface cleaner according to claim 1 or 2, wherein a surface of the cleaning tape opposite to the receiving surface of the receiving part is adhesive.

4. An optical connector end surface cleaner for cleaning an end surface of an optical connector having at least one pin protrusively provided on the end surface, comprising:
a cleaning tape to be contacted with the end surface of the optical connector; and
a receiving part in which a receiving surface on which the cleaning tape is placed is formed,
wherein the cleaning tape has a sheet-shaped resin foam (foam body) that forms a cleaning surface to be contacted with the end surface of the optical connector.

5. The optical connector end surface cleaner according to claim 4, wherein the cleaning tape has a tape-shaped base material, and a resin foam (foam body) that is layered on one surface of the tape-shaped base material and forms a cleaning surface to be contacted with the end surface of the optical connector.

6. The optical connector end surface cleaner according to claim 5, wherein the resin foam (foam body) includes at least one of a urethane foam and a (meth)acrylic foam.
